# EUROPEAN PATENT SPECIFICATION

(11) **EP 0 899 290 B1**
(45) Date of publication and mention of the grant of the patent: **25.07.2001**
(21) Application number: 98116140.9
(22) Date of filing: 26.08.1998
(51) Int. Cl.: C08J 5/18, C08J 9/08

(54) **Porous cellulose sheet and method for manufacturing the same**
Poröse Cellulosefolie und Verfahren zu ihrer Herstellung
Feuille poreuse de cellulose et procédé pour sa préparation

(30) Priority: 27.08.1997 JP 24783297
(43) Date of publication of application: 03.03.1999
(73) Proprietor: Rengo Co., Ltd., Osaka (JP)
(72) Inventor: Higashiyama, Akira, c/o Rengo Co., Ltd., Kanazu-cho, Sakai-gun, Fukui (JP); Saito, Hidenao, c/o Rengo Co., Ltd., Kanazu-cho, Sakai-gun, Fukui (JP)
(74) Representative: Grünecker, Kinkeldey, Stockmair & Schwanhäusser Anwaltssozietät

(56) References cited:
- WO-A-95/07811
- DATABASE WPI Section Ch, Week 199225 Derwent Publications Ltd., London, GB; Class A11, AN 1992-205255 XP002129952 & JP 04 136046 A (DAIWABO RAYON KK), 11 May 1992 (1992-05-11)

## Description

This invention relates to a porous cellulose sheet having no substantial difference in thickness between skin layers on both sides thereof, and a method for manufacturing it continuously.

Due to their high water absorbency, porous sheets are used for a variety of articles including car-washing and dish-washing sponges, cloths, mats and shoe insoles. Conventional such porous sheets are typically made of cellulose and synthetic resins such as polyurethane and poly(vinyl alcohol). Among them, polyurethane is particularly preferred because of its desirable properties.

But in order to manufacture polyurethane porous sheets such as sponges, freon gas has to be generally used as a foaming agent. When burned, they produce noxious gases such as hydrogen cyanide. When buried in the ground, they do not biodegrade. Thus, porous sheets such as sponges that are made from cellulose are gathering much attention in these days because cellulose is biodegradable and thus more friendly to the environment.

In order to form porous sheets such as sponges from cellulose, a mixture of a viscose, reinforcing fiber and Glauber's salt crystals are poured into a mold and coagulated by heating, the viscose is completely regenerated by use of an acid, and the Glauber's salt crystals are washed out with water or hot water to obtain a molded product. This technique is disclosed in examined Japanese patent publications 36-10992 and 36-11982.

Inside the cellulose porous sheets formed by this method, relatively large pores are formed by the Glauber's salt crystals. On both surfaces, skin layers are formed. Such skin layers are seen when the section of a cellulose porous sheet is observed under a microscope. The skin layers are dense films on surface having a thickness of 0.1/*µ*m or over and clearly different in structure from the porous core which is a bulk layer.

Although no detailed formation mechanism of such skin layers is known, it is considered as follows. The moment the viscose contacts with heat or acid, the film-like skin layer is formed on the surface of the article, and then the heat or acid conducts or diffuses to inside through the skin layer. Thus, the coagulation or regeneration speed between the skin layer and the inside bulk layer is markedly so different that structurally completely different layers, i.e. skin layer and porous core, are formed.

Performance of porous sheets largely depends on its structure. But in the above method, it is difficult to control the porous structure itself, that is, the number and size of pores, though the total volume of pores inside is adjustable. If high water absorbancy is required, skin layers should rather be not present. Thus, a sheet is formed in the form of a block and the skin layers are sliced off. But this method is extremely low in productivity.

Further, in the above method, the viscose mixture is poured into a mold, and after the heating step, it is cooled and the molded article is removed from the mold. Then, the acid treatment and water-washing steps follow. The process is thus batchwise. It takes three to four hours at 90-100°C to coagulate and regenerate the viscose mixture. Thus, the process is extremely troublesome and time-consuming.

On the other hand, in conventional continuous methods, as disclosed in examined Japanese patent publications 43-26098, 45-12676 and 46-6185, a viscose mixture is uniformly extruded onto a belt conveyor, and coagulated by heating.

But in these methods, there is a difference in the coagulating rate between a surface that is in contact and a surface not in contact with the heated continuous belt as a support. This results in an asymmetrical porous structure inside the cellulose sponge obtained, and different thicknesses of the skin layers on both sides. Such a difference in thickness between the skin layers on both sides can be a cause of such problems as curl and twist.

To prevent this problem, examined Japanese patent publications 49-16115 and 4-136046 propose methods and devices for continuously manufacturing a sheet by extruding a viscose mixture onto a net conveyor, coagulating by heating from up and down, and peeling the sheet from a net as a support. These methods have a problem in that since the molded article tangle with the net, it tends to be broken when peeled off the net. Also, the net tends to leave its telltale mark on the molded article.

One way to form a porous sheet that is free of a back-front difference is to apply a method for continuously manufacturing cellophane using a viscose solution. Such a method comprises the steps of submerging a die lip called a casting hopper into a coagulant, which is sulfuric acid, to extrude the viscose, and subjecting the extruded article to desulfurization, bleaching and softening while stretching to produce a film 20-40 *µ*m thick. The casting hopper is submerged in the coagulant because cellophane is a thin film and thus it is necessary to coagulate it as soon as possible to give it the required wet strength. Thus, if the gap of the opening of the casting hopper is increased to the size equal to the thickness of the intended sheet, it sounds feasible to manufacture a cellulose sheet.

But with this method, the casting hopper would soon get clogged because the coagulant diffuses into the viscose in the casting hopper, thus coagulating the viscose near the opening. Also, materials usable for the casting hopper are extremely limited, because high corrosion resistance to acids and high machining accuracy are required for the casting hopper.

In any of the above methods, Glauber's salt crystals are used as a pore-forming material. Since they are water-soluble salts, if they are dissolved in a large amount into a viscose solution, not only will the volume of pores in the porous sheet formed decrease, but the fluidity of the viscose solution may worsen or it may gelate due to salting out. Thus, in order to minimize dissolution of Glauber's salt crystals into the viscose solution, it is necessary to add and mix it while cooling it or to proceed to the next step quickly. But actually, an extra amount of it is usually added taking the amount dissolved into account.

An object of this invention is to provide a porous cellulose sheet which is less likely to develop curl and twist, and which can be continuously and stably manufactured, and a method of manufacturing the same.

According to this invention, there is provided a porous cellulose sheet having pores inside and formed with skin layers on both sides, wherein the difference in thickness between the skin layers is not more than 50%.

According to the present invention, there is also provided the method of manufacturing a porous cellulose sheet comprising the steps of continuously extruding a mixture of an alkaline cellulose solution and a carbonate salt as a foaming agent toward a coagulant containing an acid, and coagulating and regenerating the extruded mixture with the coagulant.

Other features and objects of the present invention will become apparent from the following description made with reference to the accompanying drawings, in which:
Fig. 1 is a schematic view showing the method of manufacturing a porous cellulose sheet according to this invention;
Fig. 2A is a sectional photo of a porous cellulose sheet obtained in Example 1, as taken by a scanning electron microscope; and
Fig. 2B is a sectional photo of a porous cellulose sheet obtained in Comparative Example 1, as taken by a scanning electron microscope.

Embodiments of this invention will be described.

The porous cellulose sheet according to this invention has pores inside and the inner porous structure is symmetrical in the direction of thickness. Skin layers formed on both sides thereof have such thicknesses that the difference in thickness between them is 50% or less. Such a sheet can be formed by continuously extruding a mixture of an alkaline cellulose solution and a foaming agent toward a coagulant to coagulate and regenerate it.

The origin of cellulose for forming the porous sheet is not limited but may be pulp, cotton or hemp. The alkaline cellulose solution may be a viscose solution, a cellulose cuprammonium solution or a cellulose carbamate solution. Among them, a viscose solution for manufacturing cellophane is preferred. If a viscose solution is selected as the alkaline cellulose solution, its cellulose concentration should preferably be 3-15 wt%, more preferably 4-10 wt%. If it is lower than 3 wt%, the regenerated cellulose sheet may be broken off during manufacturing due to low mechanical strength. If higher than 15 wt%, it will become difficult to uniformly mix and disperse other additives and to extrude the mixture due to increased viscosity, though the viscosity also varies with the polymerization degree of cellulose.

If a viscose solution is used as the alkaline cellulose solution, the concentration of alkali in the viscose solution should preferably be 2-15 wt%, more preferably 5-13 wt%, in terms of sodium hydroxide concentration. Also, the viscose solution should preferably have an ammonium chloride value of 3-12, more preferably 4-9.

A foaming agent is added to the alkaline cellulose solution to form a molding mixture. As the foaming agent, an inorganic carbonate salt may be used. The carbonate salt produces carbon dioxide by reacting with an acid used during coagulation and regeneration. This makes the cellulose sheet porous. The kind of carbonate salt used is not limited so long as it does not markedly change the properties of the alkaline cellulose solution, but it is preferable to use a carbonate salt which is insoluble in water and which is likely to produce foam by acid decomposition. Such carbonate salts include calcium carbonate, magnesium carbonate, barium carbonate and zinc carbonate. Among them, calcium carbonate is especially preferable because it is inexpensive and nontoxic, and high-purity products are easily available. Calcium carbonate may be precipitated calcium carbonate or lime stone powder.

The particle size of the carbonate salt used is not limited so long as it can pass through a lip of a die used for extrusion. But the greater the particle size, the worse the fluidity of the molding mixture and the more liable the die lip get clogged. Thus, the particle size of the carbonate salt is preferably as small as possible so long as it is dispersed sufficiently into the alkaline cellulose solution. Specifically, the carbonate salt should preferably have an average particle size of 1-15 *µ*m. Within this range, the particle size will have little influence on the inner porous structure of the sheet obtained, and it is possible to form pores having diameters of several tens to several hundreds of micrometers.

As the index of the amount of such pores, porosity is ordinarily used, which is the percentage of the pores with respect to the total volume of the material. The porous cellulose sheet according to this invention should preferably have a porosity of 30-98%. If this value is less than 30%, no good effects are expectable as a porous material. If over 98%, the mechanical strength of the porous sheet will decrease markedly.

In order to attain such a porosity, the amount of the foaming agent in the molding mixture of the alkaline cellulose solution and the foaming agent is preferably 10-500 wt%, more preferably 50-300 wt%, with respect to the amount of the cellulose in the alkaline cellulose solution. By adjusting this amount, it is possible to control the pore structure formed. If this amount is less than 10 wt%, only an extremely small number of pores can be formed. If the foaming agent is added by more than 500 wt%, not only is it impossible to increase the porosity, but the fluidity of the alkaline cellulose solution during continuous extrusion will worsen.

The foaming agent may be added directly or after dispersed in water or a sodium hydroxide solution, into the alkaline cellulose solution while stirring the latter in a mixer or a kneader. The order in which the materials are added is not limited.

The viscosity of the molding mixture may be adjusted depending upon the way of extrusion, the capacity of the pump, etc, but is preferably 10000-100000 centipoise. If the viscosity is lower than 10000 centipoise, the molding mixture would drip in thin lines through the extrusion port during extrusion. This makes it difficult to mold the mixture into a desired shape and size. If higher than 100000 centipoise, the mixing and dispersing properties of the foaming agent and other agents would deteriorate, so that it would take a long time for uniform mixing and dispersing.

If the viscosity of the molding mixture is insufficient for extrusion, a small amount of water-soluble polymer may be added to improve fluidity and increase the viscosity. Various kinds of water-soluble polymers are usable for this purpose, but starch and starch derivatives are especially preferable because they are not only inexpensive, but remain little in the sheet because they are hydrolyzed by the acid used as a coagulant and elute during the subsequent washing process. Further, while the molding mixture is coagulated after molding, microscopic pores are formed in the molded article due to microphase separation of the water-soluble polymer. Such pores, smaller than the pores formed by the foaming agent, serve to improve flexibility of the porous sheet obtained.

The method for manufacturing a porous cellulose sheet according to this invention is now described.

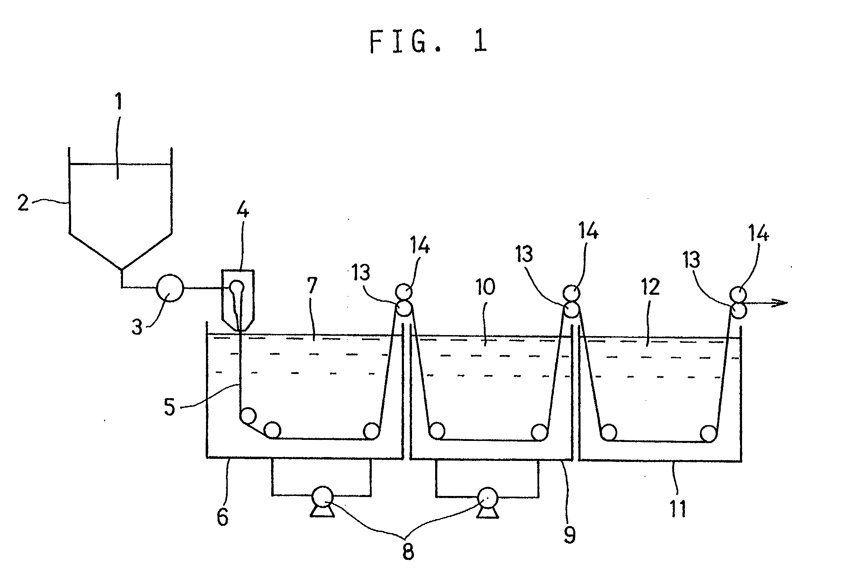

The molding mixture 1 is stored in a reservoir 2 as shown in Fig. 1 and fed to a die 4 by a feed pump 3. The die 4 forms the molding mixture 1 into a sheet. An extrusion means are not limited to any specific type. The kind of die 4 is also not limited but may be selected from various types according to the fluidity of the molding mixture 1 and the intended shape and size of the end product. For example, by using an ordinary T-die, an I-die, an annular die, etc., the mixture can be formed into the shape of a sheet, a prism, a column, a tube, etc.

The die 4 may be provided at any position as long as it can prevent diffusion of the coagulant 7 into the viscose. But in order to prevent the die 4 from being splashed with coagulant 7 and deformation of the porous sheet due to sagging of the mixture 1, the die 4 should be provided above the coagulant 7 with its outlet directed toward the coagulant 7 at a suitable distance from its surface. This makes it possible to use a die 4 made of an ordinary stainless steel, unlike a casting hopper which is immersed in coagulant for manufacturing cellophane. It is thus possible to reduce the manufacturing cost of the device.

One may wonder why the die 4 can be provided above the coagulant unlike a method for manufacturing cellophane. This is because the molding mixture 1 discharged from the die 4 is higher in viscosity than a viscose as a cellophane material, so that sagging is not so remarkable and the state before coagulation can be kept to some extent. Thus, the outlet of the die 4 can be provided at such a distance from the surface of the coagulant 7 that no sagging will occur in the uncoagulated molding mixture discharged from the die 4.

The feed pump 3 may be of any type as long as it can perform smooth, quantitative feed and allow stable extrusion from the die. For example, the pump 3 may be a screw pump or a gear pump. Also, instead of the pump 3, the mixture in the reservoir 2 may be fed pneumatically by e.g. a compressor.

The sheet 5 formed by the die 4 is then immersed in the coagulant 7 in the coagulating bath 6, so that the sheet 5 is coagulated and the foaming agent decomposes and foams. A variety of substances are usable as the coagulant, including concentrated salt solution and organic solvents. In order to cause foaming by decomposing a carbonate salt as a foaming agent simultaneously with the coagulation of the alkaline cellulose solution, an inorganic acid such as hydrochloric acid, sulfuric acid or phosphoric acid, or an organic acid such as acetic acid or benzoic acid is preferable. Among them, hydrochloric acid is particularly preferable because it does not produce any salt insoluble or slightly soluble in water after acid decomposition of the carbonate salt, and because forming and coagulation proceed quickly.

If hydrochloric acid is used as the coagulant 7, its concentration should be 1.5-20 wt%, preferably 3.5-15 wt%. If under 1.5 wt%, it will take a long time for the alkaline cellulose solution to coagulate. If over 20 wt%, rapid regeneration of cellulose will occur and lead to inhomogeneous coagulation, thus markedly deforming the sheet.

In order to promote coagulation of the alkaline cellulose solution, one or more than one inorganic neutral salts such as sodium chloride, potassium chloride, ammonium chloride, sodium sulfate or ammonium sulfate may be added to the coagulant 7, or the coagulant 7 may be heated.

The sheet 5 fed from the die 4 coagulates while being moved by guide rollers in the coagulant, and is fed into a regenerating solution 10 in a regenerating bath by driving rollers 13 and nip rollers 14. The regenerating bath 9 is provided to completely regenerate the alkaline cellulose into cellulose. The regenerating solution 10 may be any of the acids listed above as being usable as the coagulant 7. The regenerating solution 10 may be the same as the acids used as the coagulants, or the regenerating solution may have a higher acid concentration than the coagulant to shorten the regenerating time. The regenerating time can also be shortened by increasing the temperature of the regenerating solution 10.

Since the coagulant 7 and the regenerating solution 10 are circulated by a circulating pump 8, it is possible to prevent the coagulant 7 and the regenerating solution 10 from getting less homogeneous with coagulation and regeneration reactions.

The regenerated sheet 5 is fed into water 12 in a washing bath 11, and after washed sufficiently, fed to a drying process.

In this manufacturing process, a bleaching step for bleaching the sheet using e.g. a sodium hypochlorite solution, or a step for softening with glycerol, diethylene glycol, triethylene glycol, etc. may be inserted to improve a feel to the touch of the dried porous cellulose sheet. Especially if a viscose is used as the alkaline cellulose solution, a desulfurization step using sodium sulfide may be inserted after the regenerating step.

The thickness of the thus obtained porous cellulose sheet can be determined according to the intended use, but is preferably 100*µ*m-10 mm, more preferably 500 *µ*m-5 mm. If thinner than 100 *µ*m, the pores formed cannot fully exhibit expected effects. If thicker than 10 mm, during continuous manufacturing, coagulation and regeneration of cellulose would be insufficient near the center.

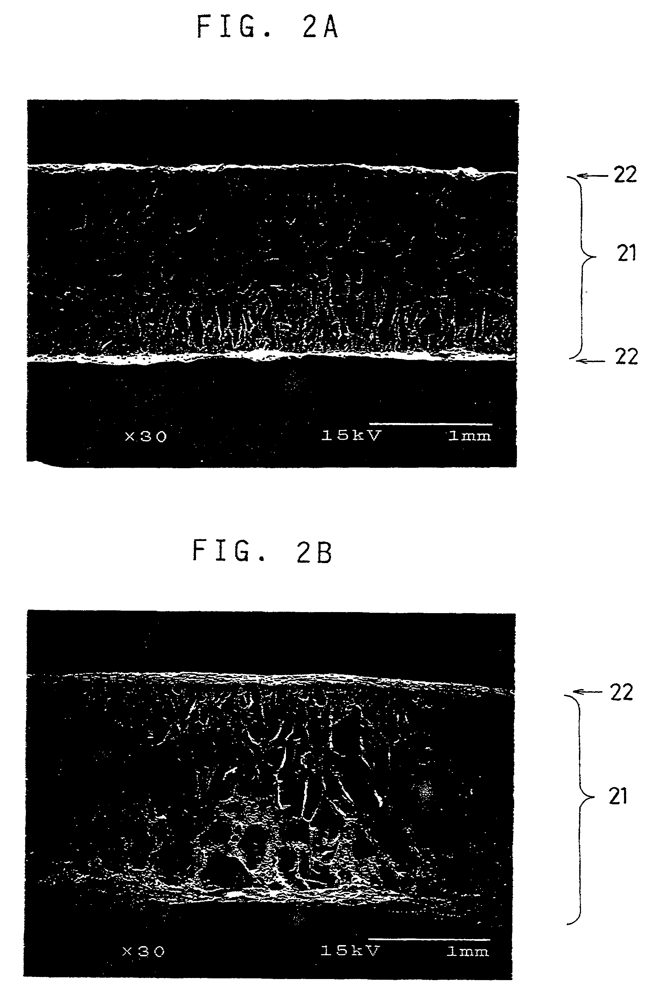

The pores in the porous cellulose sheet are ghosts of bubbles formed by the reaction of the carbonate salt with the acid of the coagulant 7. That is, the pores are formed simultaneously with coagulation. Thus, pores are formed deep inside the sheet, so that the bulk layer 21 inside the sheet is formed with a sufficient amount of pores as shown in Fig. 2A.

As shown in Fig. 2A, the porous cellulose sheet obtained has, on both sides of the bulk layer 21, skin layers 22 which are film-like layers that are denser than the bulk layer 21. The difference in thickness between skin layers should be not more than 50%. This prevents curl and twist of the porous cellulose sheet obtained.

Since the cellulose sheet manufactured by this method is porous, its mechanical strength may be insufficient for some use. In order to increase the strength of the porous cellulose sheet, reinforcing fiber may be mixed and dispersed in the molding mixture 1 to provide a porous cellulose sheet containing reinforcing fiber. The type of reinforcing fiber is not limited as long as it does not interfere with the mixing and dispersing in the alkaline cellulose solution and the extrusion. For example, it may be natural fiber such as hemp, cotton or pulp, regenerated fiber such as rayon or collagen, semisynthetic fiber such as cellulose acetate, synthetic fiber such as polyester, nylon or polyacrylate, inorganic fiber such as carbon fiber or glass fiber, or a mixture thereof. They may be physically, chemically or biologically modified.

Although depending upon the kind of fiber, the fiber length is preferably 0.5-10 mm, more preferably 2-6 mm. If the fiber length is less than 0.5 mm, no marked reinforcing effect will appear. If longer than 10 mm, fibers may tangle with each other or conglomerate, impairing mixing and dispersing and consequently clogging the die.

The amount of reinforcing fiber added should be adjusted according to the intended degree of reinforcement and intended use, but is preferably 5-200 wt% of cellulose in the alkaline cellulose solution. If its amount is less than 5 wt%, the reinforcing effect will be less likely to appear. If higher than 200 wt%, the fiber may lower the fluidity of the molding mixture and suppress foaming of the foaming agent and thus formation of pores.

As for the method of mixing and dispersing reinforcing fiber in the molding mixture, fiber may be added directly or after dispersed in water or a sodium hydroxide solution, into the alkaline cellulose solution while stirring the latter in a mixer or a kneader. The order in which the materials are added is not limited.

Since the porous cellulose sheet according to this invention is symmetrical in the thickness direction with no front-back difference, and is porous, if used as a controlled release carrier for chemicals, as long as there is no need to release a chemical in one direction, it is convenient for handling of chemicals such as impregnation. Further, with little curl and twist, its commercial-value is kept high. Also, by adjusting the thicknesses of the skin layers formed on both sides of the sheet, it is possible to control the release rate of chemicals. According to the intended use, the skin layers may not be necessary. In such a case, the skin layers can be easily removed by polishing the surface of the sheet while immersing it in alkali.

### [Examples]

Examples are shown to more specifically describe the present invention.

In the following description, "%" indicates percent by weight. Viscosities are values measured by use of a Brookfield viscometer at 20°C. The porosity of the porous cellulose sheet obtained in each Example was measured by mercury porosimetry. The thicknesses of the skin layers were measured by measuring them on a sectional photo of each sheet taken by a scanning electron microscope. For tensile strength, each sheet was subjected to moisture control in a constant-temperature, constant-humidity room kept at 20°C and 65%RH, and measured for tensile strength as a dumbbell form test piece under JIS K7113 1-1/2 by a universal testing machine at a tensile speed of 50 mm/min.

### [Example 1]

10 kg of a viscose for manufacturing cellophane (cellulose concentration: 9.5%, ammonium chloride value: 7, alkali concentration: 5.6%, viscosity: 5,500 centipoise), and 2850 g of calcium carbonate (SS#30, made by Nippon Funka Kogyo Co., Ltd. average particle size: 7.4 *µ*m) were put in a kneader and stirred and mixed at room temperature to produce a molding mixture having a viscosity of 10,500 cps.

When this mixture was fed into a coat-hanger die (lip width: 260 mm, clearance: 3 mm) placed over the coagulating bath 6 at a rate of 500 ml/min. by a gear pump at room temperature, a sheet 5 was extruded into 3.5% hydrochloric acid solution as the coagulant 7 in a good condition.

Then, the coagulated sheet 5 was completely regenerated into cellulose by use of a 7% hydrochloric acid solution as the regenerating solution 10, and after desulfurization with a 3 g/l sodium sulfide solution heated to 70 °C, the sheet was bleached with a 0.3% sodium hypochlorite solution. Finally, the sheet 5 was washed sufficiently with water and dried by use of a cylinder drier to obtain a cellulose sheet.

The sheet was 1.2 mm thick. When observed under a scanning electron microscope, as shown in Fig. 2A, it was confirmed that skin layers were formed on both sides. They were 6.2 µm and 5.3 µm thick, respectively. The difference therebetween was very small, i.e. 17%. The porosity was 68%, which shows that the sheet was very porous. The tensile strength was 9.2 kgf/cm². No curl or twist was observed in the sheet obtained.

### [Example 2]

A cellulose sheet was formed in a good extruding state in the same manner as in Example 1, except that 190g of hemp fiber (length: 2 mm, thickness: 5d) was added.

This sheet was 1.8 mm thick. Under a scanning electron microscope, skin layers were observed on both sides. They were 5.5 *µ*m and 4.8*µ*m thick, respectively. The difference therebetween was very small, i.e. 15%. The porosity was 64.6%. The tensile strength was 38.3 kgf/cm². No curl or twist was observed in the sheet obtained.

### [Example 3]

A cellulose sheet was formed in a good extruding state in the same manner as in Example 2, except that a cellulose cuprammonium solution (copper concentration: 4.0%, ammonium concentration: 9.8%, cellulose concentration: 5.7%) was used instead of the viscose solution and desulfurization was not done.

This sheet was 1.5 mm thick. Under a scanning electron microscope, skin layers were observed on both sides. They were 12.4 *µ*m and 9.6*µ*m thick, respectively. The difference therebetween was very small, i.e. 29%. The porosity was very high, i.e. 58.7%. The tensile strength was 24.0 kgf/cm². No curl or twist was observed in the sheet obtained.

### [Example 4-]

A cellulose sheet was formed in a good extruding state in the same manner as in Example 2, except that magnesium carbonate was used instead of calcium carbonate, and 380 g potato starch and 1900 g water were added to increase viscosity.

This sheet was 1.4 mm thick. Under a scanning electron microscope, skin layers were observed on both sides. They were 8.0 *µ*m and 6.6*µ*m thick, respectively. The difference therebetween was very small, i.e. 21%. The porosity was 71.0%. The tensile strength was 27.8 kgf/cm². No curl or twist was observed in the sheet obtained.

### [Comparative Example 1]

A cellulose sheet was formed in a good extruding state in the same manner as in Example 1, except that calcium carbonate was not used.

This sheet was 1.1 mm thick. Under a scanning electron microscope, though there was no front-back difference, the sheet was like a dense, hard plate. No porous core was observed. Thus, the sheet was nonporous with the porosity of less than 3.0%. The tensile strength was very high, i.e. 570 kgf/cm ². No curl or twist was observed in the sheet obtained.

### [Comparative Example 2]

Continuous extrusion of a molding mixture was tried in the same manner as in Example 1, except that 5700 g Glauber's salt crystals having an average particle size of 1 mm was used instead of calcium carbonate, and the mixture was stirred at 10°C to minimize dissolution of the Glauber's salt crystals. But the die got clogged soon, and no cellulose sheet was obtainable.

### [Comparative Example 3]

The molding mixture prepared in Example 1 was cast on a glass plate to the thickness of 3 mm, and immersed in 3.5% hydrochloric acid together with the glass plate for coagulation. The thus coagulated and separated sheet was immersed in a 7% hydrochloric acid solution as a regenerating solution for regeneration, and after washing under running water, subjected to desulfurization in 3 g/l sodium sulfide solution heated to 70 °C, and bleaching in a 0.3% sodium hypochlorite solution. Then, the sheet was washed sufficiently with water and dried by a cylinder drier to obtain a cellulose sheet.

This sheet was 1.8 mm thick. The sheet was very porous with the porosity of 71.2%. But when observed under a scanning electron microscope, as shown in Fig. 2B, although a clear skin layer was seen on one side, a skin layer was scarcely seen on the other side. Thus, the front-back difference was large. The skin layers were 18.9 *µ*m and 3.4 *µ*m thick, respectively. The difference therebetween was very large, i.e. 456%. The tensile strength was 6.8 kgf/cm². When the obtained sheet was left to stand, large curl and twist were observed.

The reason why a skin layer was scarcely seen on one side is presumably that since the mixture was cast on the glass plate, the sheet was brought into contact with the coagulant only on one side, so that a clear skin layer was formed on this side, while a skin layer was scarcely formed on the other side.

### Results

In Examples 1-4, the molding mixture was extruded from the die in a good condition, and coagulated stably into a uniform sheet form even without a support. Thus, sufficiently porous cellulose sheets were obtained. Also, the sheets obtained scarcely curled or twisted.

In contrast, in Comparative Example 1, in which no foaming agent was used, no porous sheet was obtained. When Glauber's salt crystals were used as a pore forming material in the manufacturing method according to the present application, as in Comparative Example 2, the die got clogged, making it impossible to continuously coagulate the mixture into a sheet form. Further, when a porous cellulose sheet was manufactured by a conventional casting, as in Comparative Example 3, the inner structure of the sheet obtained was asymmetrical and unhomogeneous, and the tensile strength dropped to 68% compared to Example 1. The difference in thickness between the front and back skin layers was large. Thus, when this sheet was left to stand, its roughness increased by absorbing water or drying, resulting in curl and twist.

Further, as described in Example 2, by adding reinforcing fiber, the tensile strength increased dramatically to about four times compared to Example 1, which used no reinforcing fiber.

The porous cellulose sheet according to this invention has no back-front difference, so that it is possible to prevent curl and twist of the sheet.

Since a mixture containing an alkaline cellulose solution is extruded at a level above the coagulant, and the thus molded article is soon put in the coagulant for coagulation and regeneration without a support, it is possible to minimize the front-back difference of the sheet due to contact with the support.

Since the mixture is extruded not in the coagulant but above the coagulant, it is possible to prevent the die, which serves as the outlet of the extruder, from getting clogged due to reaction of the alkaline cellulose solution with the coagulant.

Further, since a slightly water-soluble carbonate salt is used as a pore-forming material, it is possible to prevent worsening of fluidity of the molding mixture or gelation due to salting out.

Since pores are formed easily by the reaction of the carbonate salt with the acid in the coagulant and the acid disperses quickly into the sheet through the pores formed, it is possible to shorten the regeneration time.

## Claims

1. A porous cellulose sheet having pores inside and formed with skin layers on both sides, wherein the difference in thickness between said skin layers is not more than 50%.

2. A method of manufacturing a porous cellulose sheet as claimed in claim 1, comprising the steps of continuously extruding a mixture of an alkaline cellulose solution and a carbonate salt as a foaming agent toward a coagulant containing an acid, and coagulating and regenerating said extruded mixture with said coagulant.

3. A method of manufacturing a porous cellulose sheet as claimed in claim 2 wherein reinforcing fiber is added to said mixture.

## Patentansprüche

1. Poröses Zelluloseblatt, mit innenliegenden Poren und geformt mit Hautschichten auf beiden Seiten, wobei der Unterschied der Dicken der Hautschichten nicht größer als 50 % ist.

2. Verfahren für die Herstellung eines porösen Zelluloseblattes nach Anspruch 1, umfassend die Schritte der kontinuierlichen Extrusion einer Mischung einer alkalischen Zelluloselösung und eines Carbonatsalzes, als Treibmittel, in Richtung auf einen Koagulator, enthaltend eine Säure, und Koagulieren und Regenerieren besagter extrudierter Mischung mit besagtem Koagulator.

3. Verfahren der Herstellung eines porösen Zelluloseblatt nach Anspruch 2, wobei eine Verstärkungsfaser besagter Mischung zugegeben wird.

## Revendications

1. Feuille poreuse de cellulose ayant des pores à l'intérieur, la feuille étant formée avec des couches de peau sur les deux faces où la différence d'épaisseur entre lesdites couches de peau n'est pas supérieure à 50 %.

2. Procédé de fabrication d'une feuille poreuse de cellulose selon la revendication 1, comprenant les étapes consistant à extruder en continu un mélange d'une solution de cellulose alcaline et d'un sel de carbonate servant d'agent moussant, dans un coagulant contenant un acide, et à coaguler et à régénérer ledit mélange extrudé avec ledit coagulant.

3. Procédé de fabrication d'une feuille poreuse de cellulose selon la revendication 2, dans lequel des fibres de renfort sont ajoutées audit mélange.
